# EUROPÄISCHE PATENTSCHRIFT

(11) **EP 2 639 912 B1**
(45) Veröffentlichungstag und Bekanntmachung des Hinweises auf die Patenterteilung: **19.07.2017**
(21) Anmeldenummer: 13158521.8
(22) Anmeldetag: 11.03.2013
(51) Int. Cl.: H02G 3/12, H02G 3/08, H02G 3/04

(54) **Geräteeinbaudose für Geräteeinbaukanäle sowie diese umfassender Geräteeinbaukanal**
Device installation socket for device installation channels and device installation channel comprising same
Boîtier encastrable pour canaux d'intégration d'appareil et canal d'intégration d'appareils doté de celui-ci

(30) Priorität: 12.03.2012 DE 202012100876 U
(43) Veröffentlichungstag der Anmeldung: 18.09.2013
(73) Patentinhaber: REHAU AG + Co, 95111 Rehau (DE)
(72) Erfinder: Seidel, Bernd, 08209 Auerbach (DE); Künzel, Werner, 95111 Rehau (DE); Christ, Michael, 95028 Hof (DE); Friedrich, Jochen, 95119 Naila (DE); Salzhuber, Frank, 90419 Nürnberg (DE); Engelbrecht, Bernd Jürgen, 90763 Fürth (DE)

(56) Entgegenhaltungen:
- DE-A1- 3 926 062
- DE-A1- 10 003 922
- DE-A1- 10 119 113
- FR-A1- 2 649 253

## Beschreibung

Die vorliegende Erfindung betrifft eine Geräteinbaudose für Geräteeinbaukanäle, die ein nach oben offenes Gehäuse mit einem Bodenteil und an einer Seite des Bodenteils angeordneten Wandungen sowie an der anderen Seite des Bodenteils angeordnete Haltevorrichtungen zur Befestigung der Geräteeinbaudose am Geräteeinbaukanal umfasst.

Derartige Geräteeinbaudosen für Geräteeinbaukanäle sind aus dem Stand der Technik bekannt. Beispielsweise beschreibt die DE 31 12 347 A1 eine derartige Geräteeinbaudose für Geräteeinbaukanäle, in deren Wandungen über Sollbruchstellen Öffnungen zur Einführung von Kabeln vorgesehen sind, die vor der Einführung eines Kabels herausgebrochen werden müssen. Aufgrund der relativ geringen Größe der Kabeleinführöffnungen ist die in der DE 31 12 347 A1 beschriebene Geräteeinbaudose lediglich als Einbaudose zur Aufnahme elektrischer Steckdosen geeignet. Soll eine derartige Einbaudose als Dose zur Aufnahme von Datengeräten verwendet werden, müssen in einem Nachbearbeitungsschritt aufgrund der für die zu verwendeten Datenkabel vorgeschriebenen Biegeradien in Abhängigkeit zur Anschlussrichtung des Datengeräts größere Teile der Wandungen entfernt werden. Alternativ dazu ist zur Aufnahme einer Datendose eine andere Geräteeinbaudose zu verwenden, was zum einen für den Installationsbetrieb eine höhere Lagerhaltung nach sich zieht und zum anderen die Gefahr für Verwechslungen der jeweiligen Geräteeinbaudosen mit sich bringt. Eine Geräteeinbaudose gemäß dem Oberbegriff des Anspruchs 1 ist dem Dokument DE 39 26 062 A1 zu entnehmen. Weiterer relevanter Stand der Technik ist der DE 101 19 113 A1 zu entnehmen; dieses Dokument zeigt eine Geräteeinbaudose mit reversibel abnehmbaren Eckstücken an benachbarten Ecken. Vor diesem Hintergrund liegt der vorliegenden Erfindung die Aufgabe zugrunde, eine Geräteeinbaudose für Geräteeinbaukanäle der eingangs beschriebenen Art zur Verfügung zu stellen, die sowohl zur Aufnahme von elektrischen Steckdosen als auch zur Aufnahme von Datendosen eingesetzt werden kann. Auf diese Weise wird die für den Elektroinstallationsbetrieb erforderliche Lagerhaltung verringert und die Gefahr der Verwechslung von Geräteeinbaudosen für Strom- oder Dateninstallation tritt nicht mehr auf. Darüber hinaus soll die erfindungsgemäße Elektroeinbaudose einen einfachen Aufbau besitzen, gut handhabbar sein und kostengünstig herzustellen sein. Darüber hinaus liegt die Aufgabe der vorliegenden Erfindung in der Bereitstellung eines Geräteeinbaukanals mit einer derartigen Geräteeinbaudose.

Diese und andere Aufgaben werden durch eine Geräteeinbaudose für Geräteeinbaukanäle mit den Merkmalen des Anspruchs 1 bzw. durch einen Geräteeinbaukanal mit den Merkmalen des Geräteeinbaukanals nach Anspruch 4 gelöst. Bevorzugte Ausführungsformen der erfindungsgemäßen Geräteeinbaudose sind in den abhängigen Ansprüchen beschrieben. Gemäß der vorliegenden Erfindung wurde erkannt, dass eine als Geräteeinbaudose zur Aufnahme von elektrischen Steckdosen einsetzbare Geräteeinbaudose auch als Geräteeinbaudose zur Aufnahme von Datendosen verwendet werden kann, wenn Teile der Wandungen reversibel von der Geräteeinbaudose abnehmbar sind. In diesem Zusammenhang bedeutet der Begriff "reversibel", dass die von der Geräteeinbaudose abnehmbaren Teile der Wandungen nach deren Abnahme auch wieder mit der Geräteeinbaudose verbunden bzw. an die Geräteeinbaudose wieder angebaut werden können, wodurch der Zustand der Geräteeinbaudose vor Abnahme der Teile der Wandungen wieder hergestellt wird, ohne das dazu Hilfsmittel wie Klebstoff oder ein geeignetes Verbindungsmittel (z. B. eine Schraube) eingesetzt werden muss.

Dementsprechend liegt die vorliegende Erfindung in der Bereitstellung einer Geräteeinbaudose für Geräteeinbaukanäle, die ein nach oben offenes Gehäuse mit einem Bodenteil und an einer Seite des Bodenteils angeordneten Wandungen sowie an der anderen Seite des Bodenteils angeordnete Haltevorrichtungen zur Befestigung der Geräteinbaudosen am Geräteeinbaukanal umfasst, wobei zumindest Teile der Wandungen reversibel von der Geräteeinbaudose abnehmbar sind. Darüber hinaus liegt die vorliegende Erfindung in der Bereitstellung eines Geräteeinbaukanals, der mindestens eine derartige erfindungsgemäße Geräteeinbaudose umfasst. Die reversibel von der Geräteeinbaudose abnehmbaren Teile der Wandungen sind als Eckstücke ausgebildet. Auf diese Weise ist gewährleistet, dass die in die erfindungsgemäße Geräteeinbaudose aufzunehmenden Datendosen aufgrund der vorgeschriebenen Biegeradien für die zu verwendenden Datenkabel, die mit den Datendosen verbunden werden sollen, von einem weiten Bereich zugänglich sind bzw. die Datenleitungen in einem weiten Bereich in die erfindungsgemäße Geräteeinbaudose eintreten können. Die Eckstücke sind im zusammengesetzten Zustand der erfindungsgemäßen Geräteeinbaudose ineinander benachbarten Ecken der Geräteeinbaudose angeordnet. Auf diese Weise wird eine Seite der Geräteeinbaudose vollständig zugänglich. Dabei bilden Abschnitte zweier im zusammengesetzten Zustand in einander benachbarten Ecken der erfindungsgemäßen Geräteeinbaudose angeordnete Eckstücke zusammen eine Wandung der Geräteeinbaudose. Dadurch bleibt die ggf. offene Wandung der erfindungsgemäßen Geräteeinbaudose in ihrem vollständigen Zustand vollständig verschlossen. Dabei stehen die Abschnitte jeweils über Rastelemente mit einem Halteelement im Eingriff, was an dem Bodenteil angeordnet ist.

Ein derartiges Halteelement gewährleistet einen stabilen Sitz der beiden mit dem Halteelement verbundenen Eckstücke.

Es kann auch hilfreich sein, wenn das Bodenteil an seinem Randbereich zumindest teilweise eine verringerte Dicke aufweist, die im zusammengesetzten Zustand der erfindungsgemäßen Geräteeinbaudose zumindest teilweise in mit den Randbereichen mit verringerter Dicke kooperierenden Klammerelementen der Eckstücke aufgenommen ist. Auf diese Weise ist ein stabiler Sitz der in die erfindungsgemäße Geräteeinbaudose eingesetzten Eckstücke am Bodenteil gewährleistet.

Es kann auch von Vorteil sein, wenn das Bodenteil an seinem Randbereich zumindest eine Führungsaufnahme aufweist, in die im zusammengesetzten Zustand der erfindungsgemäßen Geräteeinbaudose ein an den abnehmbaren Teilen der Wandungen angeordnetes Führungselement aufgenommen ist. Ein derartiges Führungssystem gewährleistet ein einfaches Einfügen der abgenommenen Teile der Wandungen und trägt darüber hinaus zu einem stabilen Sitz in der zusammengesetzten erfindungsgemäßen Geräteeinbaudose bei.

Zur Herstellung der erfindungsgemäßen Geräteeinbaudose und der dazugehörigen Eckstücke hat sich Spritzgießen als bevorzugte Art der Herstellung erwiesen. Polyvinylchlorid (PVC), Polyethylen (insbesondere HDPE), Polyamid (PA; insbesondere Polyamid-6 und Polyamid-6,6) und Polypropylen (insbesondere statistisches Polypropylen PP-R) dienen als bevorzugte Materialien für die erfindungsgemäße Geräteeinbaudose. Während für erfindungsgemäße Geräteeinbaukanäle dieselben Materialien bevorzugt sind, werden diese in an sich bekannter Weise bevorzugt mittels Spritzguss hergestellt.

Im Folgenden soll die vorliegende Erfindung unter Bezugnahme auf die in den Figuren dargestellte Ausführungsform im Detail erläutert werden. Dabei zeigen:
- Fig. 1: eine perspektivische Ansicht einer Ausführungsform einer erfindungsgemäßen Geräteeinbaudose mit zwei abgenommenen Eckteilen;
- Fig. 2: eine perspektivische Ansicht eines ersten Eckstücks;
- Fig. 3: eine Seitenansicht des in Fig. 2 gezeigten ersten Eckstücks;
- Fig. 4: eine perspektivische Ansicht eines zweiten Eckstücks;
- Fig. 5: eine Seitenansicht des in Fig. 4 gezeigten zweiten Eckstücks;
- Fig. 6: eine perspektivische Ansicht der in Fig. 1 dargestellten Geräteeinbaudose mit eingesetztem ersten und zweiten Eckstück; und
- Fig. 7: eine Querschnittsdarstellung der in den Figuren gezeigten Ausführungsform der erfindungsgemäßen Geräteeinbaudose in in einen Geräteeinbaukanal eingesetzten Zustand mit eingesetztem Arretierungselement.

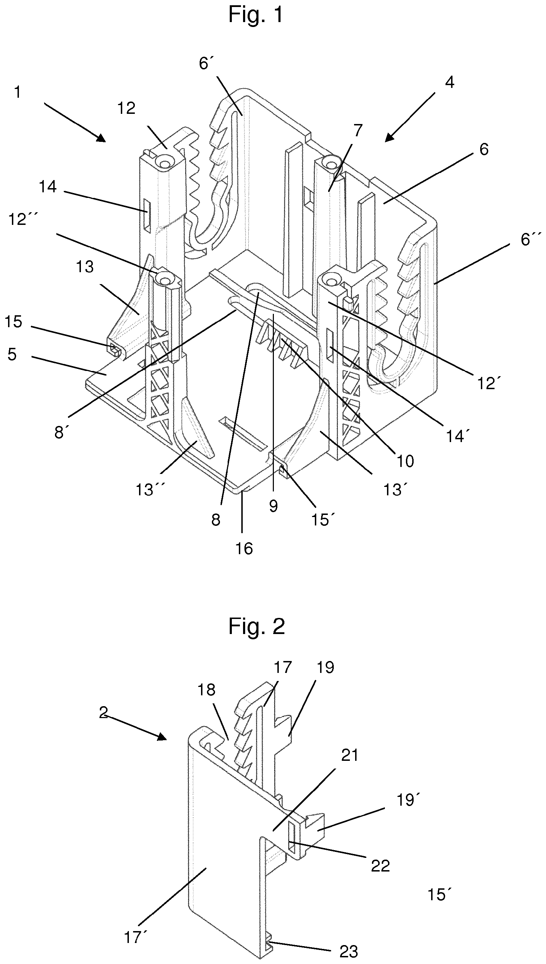

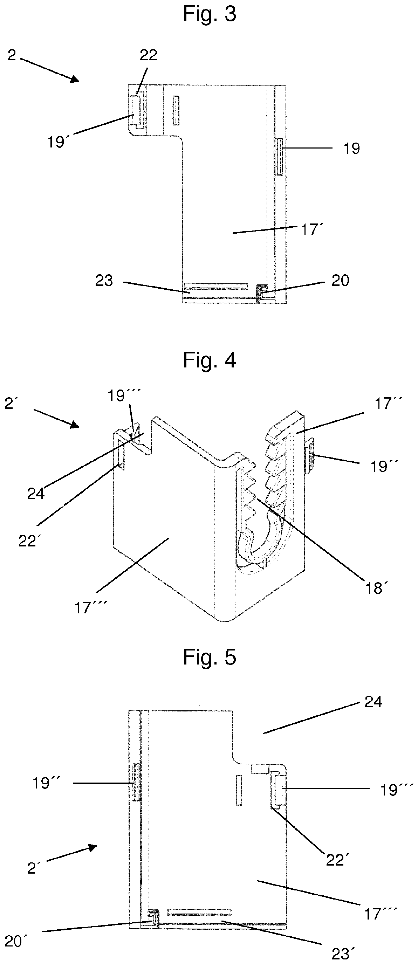

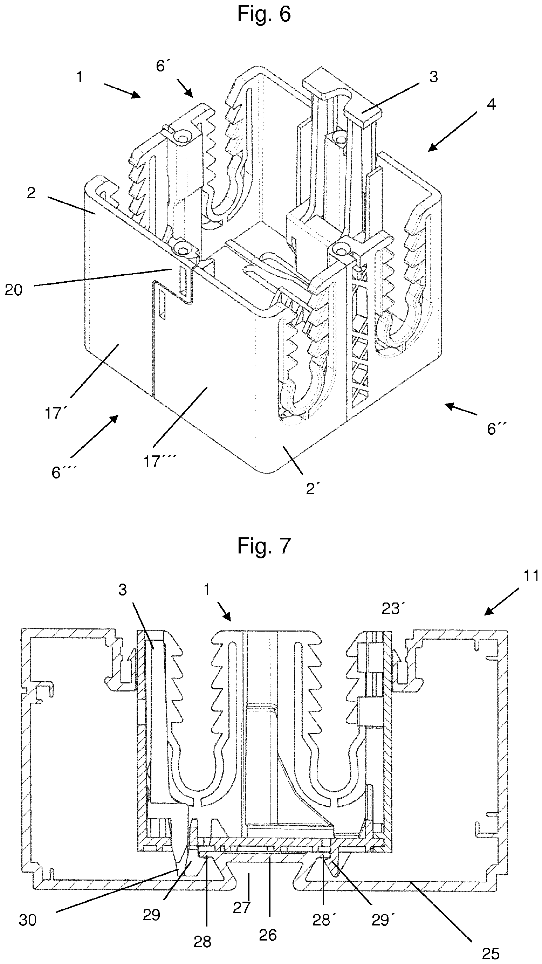

In Figur 1 ist eine Ausführungsform einer erfindungsgemäßen Geräteeinbaudose 1 in einer perspektivischen Darstellung gezeigt, wobei zwei reversibel einsetzbare Eckstücke 2, 2' der Geräteeinbaudose 1 (vgl. Fig. 5) sowie das Arretierungselement 3 (vgl. Fig. 6) nicht in die erfindungsgemäßen Geräteeinbaudose 1 eingesetzt sind. Das erfindungsgemäße Montageelement 1 umfasst ein nach oben offenes Gehäuse 4 mit einem Bodenteil 5 sowie Wandungen 6, 6', 6", 6"'. Dabei ist die Wandung 6 als Ganzes einstückig mit dem Bodenteil 4 verbunden, während die Wandungen 6', 6" nur etwa zur Hälfte einstückig mit dem Bodenteil 4 des Montageelements 1 verbunden sind. Der Rest der Wandungen 6', 6" sowie die der Wandung 6 gegenüberliegende Wandung 6'" werden durch Eckstücke 2, 2' gebildet, die entfernbar in das Montageelement 1 eingesetzt werden können. An der Wandung 6 ist eine Führung 7 angeordnet, die zur Führung des Arretierungselements 3 (vgl. Fig. 6) dient.

Das Bodenteil 5 des Montageelements 1 weist zwei vorzugsweise parallel zueinander verlaufende Öffnungen 8, 8' auf, die als Freischnitte ausgebildet sind und die voneinander durch einen Steg 9 getrennt sind. In der in Fig. 1 gezeigten Ausführungsform ist der Steg 9 überhöht ausgebildet, d.h. seine Dicke übersteigt die Stärke des Bodenteils 5. Dabei ist der Steg 9 etwa in der Mitte seiner Längserstreckung am dicksten ausgebildet. An der der Wandung 6 abgewandten Seite der Öffnung 8 ist ein Stützelement 10 angeformt, das ebenfalls zum Führen des Arretierungselements 3 beim Einbau der erfindungsgemäßen Geräteeinbaudose 1 in einen Geräteeinbaukanal 11 beiträgt.

Etwa in der Mitte der Wandungen 6', 6" ist im Randbereich des Bodenteils 4 jeweils ein als Holm ausgebildetes Halteelement 12, 12' mit einem Sockel 13, 13' ausgebildet. An der zum freien Teil der Wandungen 6', 6" gerichteten Seite der Haltelemente 12, 12' ist jeweils eine Rastaufnahme 14, 14' vorhanden, die vorzugsweise als schlitzförmige Rastaufnahme ausgebildet ist und zum Verrasten der Eckstücke 2, 2' dient. An dem jeweiligen Sockel 13, 13' ist eine Führungsaufnahme 15, 15' angeordnet, deren Führungsbereich einen L-förmigen Querschnitt besitzt. An der der Wandung 6 gegenüberliegenden Seite des Bodenelements 4 ist ein weiteres, als Holm ausgebildetes Halteelement 12" mit zugehörigem Sockel 13" angeordnet. Zur offenen Oberseite des Gehäuses 4 hin weisen die Halteelemente 12, 12', 12" sowie die Führung 7 Bohrungen zur Aufnahme von Schrauben auf, mit der die in die erfindungsgemäße Geräteeinbaudose 1 einzusetzenden Installationsgeräte wie Steckdosen, Datendosen, Empfänger für Fernsteuerungssysteme und dergleichen durch Verschraubung an der Geräteeinbaudose 1 festgelegt werden können.

An ihrer Unterseite weist die Bodenplatte 4 an dem Randbereich, an dem das Halteelement 12" angeordnet ist, einen verjüngten Randbereich 16 auf.

Um das nach oben offene Gehäuse 4 zu vervollständigen, werden Eckstücke 2, 2' in die Geräteeinbaudose 1 eingesetzt, die in den Figuren 2 bis 5 gezeigt sind. Dabei zeigt Fig. 2 zunächst eine perspektivische Ansicht eines ersten Eckstücks 2, durch das die Wandung 6' vervollständigt und die Wandung 6'" teilweise gebildet wird. Das erste Eckstück 2 umfasst zwei über einen abgerundeten Verbindungsbereich miteinander verbundene Abschnitte 17, 17', wobei der Abschnitt 17 die Wandung 6' ergänzt und eine Kabeleinführung 18 aufweist. Am seitlichen Rand des Abschnitts 17 ist ein Rastelement 19 angeformt, das zum Einbau des ersten Eckstücks 2 in die erfindungsgemäße Geräteeinbaudose 1 in die Rastaufnahme 14 des Halteelements 12 eingeführt wird. An seinem unteren Randbereich weist der Abschnitt 17 ein Führungselement 20 auf, das in der hierin beschriebenen Ausführungsform der erfindungsgemäßen Geräteeinbaudose 1 einen L-förmigen Querschnitt besitzt und beim Einsetzen des ersten Eckstücks 2 in die erfindungsgemäße Geräteeinbaudose 1 in der Führungsaufnahme 15 aufgenommen wird.

Der Abschnitt 17' bildet im zusammengesetzten Zustand der erfindungsgemäßen Geräteeinbaudose 1 einen Teil der Wandung 6"'. An einer Seite weist der Abschnitt 17' eine Verlängerung 21 mit daran angeformtem Rastelement 19' auf. In der Nähe des Rastelements 19' ist in der Verlängerung 21 ein Loch 22 angeordnet, durch das dem Rastelement 19' Flexibilität verliehen wird. Im zusammengesetzten Zustand der erfindungsgemäßen Geräteeinbaudose 1 ist das Rastelement 19' mit dem Halteelement 12" des Bodenteils 4 verrastet. Am unteren Bereich des Abschnitts 17' ist ein Klammerelement 23 angeordnet, das in Form zweier parallel zueinander ausgebildeter Stege ausgebildet ist und in das im zusammengesetzten Zustand der erfindungsgemäßen Geräteeinbaudose 1 der verjüngte Randbereich 16 der Bodenplatte 4 aufgenommen ist.

Fig. 3 zeigt das in Fig. 2 dargestellte erste Eckstück 2 in einer Seitenansicht. Daraus gehen insbesondere die Anordnung der Rastelemente 19, 19', der das Klammerelement 23 bildenden Stege sowie die L-Form des Führungselements 20 besser hervor.

Das zweite Eckstück 2' ist in Fig. 4 ebenfalls in einer perspektivischen Ansicht gezeigt. Analog zum ersten Eckstück 2 umfasst das zweite Eckstück 2' zwei über einen abgerundeten Verbindungsbereich miteinander verbundene Abschnitte 17", 17"'. Der Abschnitt 17" vervollständigt im zusammengesetzten Zustand der erfindungsgemäßen Geräteeinbaudose 1 die Wandung 6" und umfasst eine Kabeleinführung 18', während der Abschnitt 17'" zusammen mit dem Abschnitt 17' des ersten Eckstücks 2 die Wandung 6'" der vollständigen erfindungsgemäßen Geräteeinbaudose 1 bildet. Am seitlichen Rand des Abschnitts 17" befindet sich wiederum ein Rastelement 19", das zum Einbau des zweiten Eckstücks 2' in die erfindungsgemäße Geräteinbaudose 1 in die Rastaufnahme 14' des Halteelements 12' eingeführt wird. An seinem unteren Randbereich weist der Abschnitt 17" ein dem Führungselement 20 entsprechendes Führungselement 20' auf, das wiederum einen L-förmigen Querschnitt besitzt und beim Einsetzen des zweiten Eckstücks 2' in die erfindungsgemäße Geräteeinbaudose 1 in der Führungsaufnahme 15' aufgenommen wird, was aus der Seitenansicht des zweiten Eckstücks 2' gemäß Fig. 5 hervorgeht.

Im zusammengesetzten Zustand der erfindungsgemäßen Geräteeinbaudose 1 bildet der Abschnitt 17'" zusammen mit dem Abschnitt 17' des ersten Eckstücks 2 die Wandung 6"'. Hierzu weist der Abschnitt 17'" eine Ausnehmung 24 auf, in der im zusammengesetzten Zustand die Verlängerung 21 des ersten Eckstücks 2 aufgenommen ist. Auf einer Seite weist der Abschnitt 17'" ein angeformtes Rastelement 19'" auf, wobei wiederum in der Nähe des Rastelements 19'" ein schlitzförmiges Loch 22' angeordnet ist. Das schlitzförmige Loch 22' verleiht dem Rastelement 19'" wiederum die nötige Flexibilität. Im zusammengesetzten Zustand der erfindungsgemäßen Geräteeinbaudose 1 ist das Rastelement 19'" mit dem Halteelement 12" des Bodenteils 4 verrastet. Am unteren Bereich des Abschnitts 17'" ist wiederum ein Klammerelement 23' angeordnet, das auch im Fall des zweiten Eckstücks 2' in Form zweier parallel zueinander ausgebildeter Stege ausgebildet ist und in das im zusammengesetzten Zustand der erfindungsgemäßen Geräteeinbaudose 1 ein Abschnitt des verjüngten Randbereichs 16 der Bodenplatte 4 aufgenommen ist. Die Form des Führungselements 20' sowie des Klammerelements 23' sind in der Seitenansicht des zweiten Eckstücks gemäß Fig. 5 gezeigt.

Fig. 6 zeigt eine perspektivische Ansicht der erfindungsgemäßen Geräteeinbaudose 1, wobei sowohl das erste Eckstück 2 als auch das zweite Eckstück 2' in die Geräteinbaudose 1 eingefügt sind. Wie aus Fig. 6 zu erkennen ist, bilden die Abschnitte 17' und 17'" die Wandung 6'" des nach oben offenen Gehäuses 4, wobei die Verlängerung 20 des Abschnitts 17' die Ausnehmung 24 des Abschnitts 17'" ausfüllt. Gleichzeitig sind die Rastelemente 19' und 19'" mit dem Halteelement 12" verrastet, während die Rastelement 19 und 19" in die Rastaufnahmen 14, 14' der Halteelemente 12, 12' aufgenommen sind und der verjüngte Randbereich 16 des Bodenteils 4 in den Klammerelementen 23, 23' des ersten bzw. zweiten Eckstücks 2, 2' aufgenommen ist.

Fig. 7 zeigt eine Querschnittsdarstellung der in den Figuren gezeigten Ausführungsform der erfindungsgemäßen Geräteeinbaudose 1 im in einen Geräteeinbaukanal 11 eingesetzten Zustand, wobei das Arretierungselement 3 in die Geräteeinbaudose 1 eingesetzt ist. Der Geräteeinbaukanal 11 weist eine am Kanalboden 25 angeordnete Halteschiene 26 auf, die in der vorliegenden Ausführungsform als Hutschiene 26 ausgebildet ist.

Die Halteschiene 26 weist an der der erfindungsgemäßen Geräteeinbaudose 1 abgewandten Seite der Halteschiene 26 eine sich in Längsrichtung des Geräteeinbaukanals 11 erstreckende Ausnehmung 27 auf, die eine vereinfachte Wandmontage des Geräteeinbaukanals 11 ermöglicht. An beiden Seiten der Halteschiene 26 sind Rastvorsprünge 28, 28' angeordnet, die mit als Rasthaken ausgebildeten Haltevorrichtungen 29, 29' kooperieren, die an der den Wandungen 6, 6', 6", 6'" des Gehäuses 4 abgewandten Seite des Bodenteils 5 der Geräteeinbaudose 1 angeordnet sind. Zum Einbau der Geräteeinbaudose 1 in den Geräteeinbaukanal 11 werden zunächst die Haltevorrichtungen 29' (es handelt sich um zwei Haltevorrichtungen 29', wobei die erste die andere in der Querschnittsdarstellung gemäß Fig. 7 verdeckt) hinter den Rastvorsprung 28' der Halteschiene 26 angeordnet und die Geräteeinbaudose 1 mit der Halteschiene 26 verrastet, indem die Geräteeinbaudose 1 in Richtung des Kanalbodens 25 gedrückt wird. Dadurch schiebt sich das Halteelement 29, das aufgrund der Öffnungen 8, 8' als flexible Rasthaken ausgebildet ist, über eine Einführungsschräge über den anderen Rastvorsprung 28 der Halteschiene 26, bis die Haltevorrichtung 29 über die Halteschiene 26 geschoben ist und die erfindungsgemäße Geräteeinbaudose 1 mit der Halteschiene 26 des Geräteeinbaukanals 11 verrastet. Damit liegen die aufgrund von Stützelementen als starre Rasthaken ausgebildeten Haltevorrichtungen 29' auf einer Längsseite der Halteschiene 26 an, während die flexible Haltevorrichtung 29 an der anderen Längsseite der Halteschiene 26 anliegt. Auf diese Weise ist die Verschiebbarkeit der erfindungsgemäßen Geräteeinbaudose 1 entlang der Halteschiene 26 des Geräteeinbaukanals 11 gewährleistet.

Nachdem die erfindungsgemäße Geräteeinbaudose 1 in ihre exakte Position in Längsrichtung des Geräteeinbaukanals 11 gebracht worden ist, wird das Arretierungselement 3 entlang der Führung 7 vollständig in Richtung des Kanalbodens 26 gedrückt. Dadurch gelangt der Stützabschnitt 30 des Arretierungselements 3 in eine Position, in der er an der Halteschiene 26 abgewandten Seite der flexiblen Haltevorrichtung 29 anliegt und so die flexiblen Haltevorrichtung 29 stärker gegen den Rastvorsprung 28 der Halteschiene 26 presst. Dadurch wird ein weiteres Verschieben der erfindungsgemäßen Geräteeinbaudose 1 entlang der Halteschiene 26 wirksam verhindert. Auf diese Weise ist die Position der erfindungsgemäßen Geräteeinbaudose 1 in dem Geräteeinbaukanal 11 arretiert.

Nach einer derartigen Montage des der erfindungsgemäßen Geräteeinbaudose 1 in den Geräteinbaukanal 11 können Installationsgeräte wie Steckdosen, Schalter, Empfänger von Fernsteuerungssystemen, Datendosen, Telefondosen und dergleichen in die erfindungsgemäße Geräteeinbaudose 1 eingesetzt und beispielsweise durch Verschraubung darin befestigt werden.

Die vorliegende Erfindung wurde unter Bezugnahme auf die in den Figuren gezeigte Ausführungsform der erfindungsgemäßen Geräteeinbaudose im Detail erläutert. Es versteht sich, dass die Erfindung nicht auf die dargestellte Ausführungsform beschränkt ist.

## Patentansprüche

1. Geräteeinbaudose (1) für Geräteeinbaukanäle (11), die ein nach oben offenes Gehäuse (4) mit einem Bodenteil (5) und an einer Seite des Bodenteils (5) angeordneten Wandungen (6, 6', 6", 6"') sowie an der anderen Seite des Bodenteils (5) angeordnete Haltevorrichtungen (29, 29') zur Befestigung der Geräteeinbaudose (1) am Geräteeinbaukanal (11) umfasst, wobei zumindest Teile der Wandungen (6, 6', 6", 6"') reversibel von der Geräteeinbaudose (1) abnehmbar sind und die reversibel von der Geräteeinbaudose (1) abnehmbaren Teile der Wandungen (6, 6', 6", 6"') als Eckstücke (2, 2') ausgebildet sind, **dadurch gekennzeichnet, dass** die Eckstücke (2, 2') im zusammengesetzten Zustand der Geräteeinbaudose (1) in einander benachbarten Ecken der Geräteeinbaudose (1) angeordnet sind, wobei Abschnitte (17', 17'") zweier im zusammengesetzten Zustand in einander benachbarten Ecken der Geräteeinbaudose (1) angeordneter Eckstücke (2, 2') zusammen eine der Wandungen (6"') der Geräteeinbaudose (1) bilden und jeweils über Rastelemente (19', 19'") mit einem Halteelement (12") im Eingriff stehen, das an dem Bodenteil (5) des Gehäuses (4) angeordnet ist.

2. Geräteeinbaudose (1) für Geräteeinbaukanäle (11) nach Anspruch 1, **dadurch gekennzeichnet, dass** das Bodenteil (5) des Gehäuses (4) an seinem Randbereich zumindest teilweise eine verringerte Dicke aufweist, die im zusammengesetzten Zustand der Geräteeinbaudose (1) zumindest teilweise in mit diesen kooperierenden Klammerelementen (23, 23') der Eckstücke (2, 2') aufgenommen ist.

3. Geräteeinbaudose (1) für Geräteeinbaukanäle (11) nach Anspruch 1 oder Anspruch 2, **dadurch gekennzeichnet, dass** das Bodenteil (5) des Gehäuses (4) an seinem Randbereich zumindest eine Führungsaufnahme (15, 15') aufweist, in die im zusammengesetzten Zustand der Geräteeinbaudose (1) ein an den abnehmbaren Teilen der Wandungen (6, 6', 6", 6'") angeordnetes Führungselement (20, 20') aufgenommen ist.

4. Geräteeinbaukanal (11), der mindestens eine Geräteeinbaudose (1) für Geräteeinbaukanäle (11) gemäß einem der Ansprüche 1 bis 3 umfasst.

## Claims

1. Device installation socket (1) for device installation channels (11), which comprises an upwardly open housing (4) with a bottom part (5) and walls (6, 6', 6", 6"') arranged on one side of the bottom part (5) and holding devices (29, 29'), which are arranged on the other side of the bottom part (5), for fastening the device installation socket (1) to the device installation channel (11), wherein at least parts of the walls (6, 6', 6", 6"') are reversibly removable from the device installation socket (1), and those parts of the walls (6, 6', 6", 6"') which are reversibly removable from the device installation socket (1) are designed as corner pieces (2, 2'), **characterized in that**, in the assembled state of the device installation socket (1), the corner pieces (2, 2') are arranged in mutually adjacent corners of the device installation socket (1), wherein portions (17', 17'") of two corner pieces (2, 2') arranged in mutually adjacent corners of the device installation socket (1) in the assembled state together form one of the walls (6'") of the device installation socket (1) and are each in engagement via latching elements (19', 19'") with a holding element (12") which is arranged on the bottom part (5) of the housing (4).

2. Device installation socket (1) for device installation channels (11) according to Claim 1, **characterized in that** at least parts of the edge region of the bottom part (5) of the housing (4) have a reduced thickness which, in the assembled state of the device installation socket (1), is at least partially accommodated in clip elements (23, 23') of the corner pieces (2, 2'), said clip elements co-operating with said edge region parts.

3. Device installation socket (1) for device installation channels (11) according to Claim 1 or Claim 2, **characterized in that** the edge region of the bottom part (5) of the housing (4) has at least one guide receptacle (15, 15') in which, in the assembled state of the device installation socket (1), a guide element (20, 20') arranged on the removable parts of the walls (6, 6', 6", 6'") is accommodated.

4. Device installation channel (11) which comprises at least one device installation socket (1) for device installation channels (11) according to one of Claims 1 to 3.

## Revendications

1. Boîtier d'appareil encastrable (1) pour canaux d'intégration d'appareils (11), comprenant un boîtier (4) muni d'une partie de fond (5) et de cloisons (6, 6', 6", 6"') disposées sur un côté de la partie de fond (5) ainsi que de dispositifs de maintien (29, 29') disposés sur l'autre côté de la partie de fond (5) pour la fixation du boîtier d'appareil encastrable (1) au canal d'intégration d'appareil (11), dans lequel au moins une partie des cloisons (6, 6', 6", 6"') peut être reçue de manière réversible dans le boîtier d'appareil encastrable (1) et les parties des cloisons (6, 6', 6", 6"') pouvant être reçues de manière réversible dans le boîtier d'appareil encastrable (1) sont réalisées sous la forme de pièces d'angle (2, 2'), **caractérisé en ce que** les pièces d'angle (2, 2'), à l'état assemblé du boîtier d'appareil encastrable (1), sont disposées dans des angles adjacents les uns aux autres du boîtier d'appareil encastrable (1), dans lequel des sections (17', 17"') de deux pièces d'angles (2, 2'), à l'état assemblé, disposés dans des angles adjacents les un aux autres du boîter d'appareil encastrable (1) forment ensemble l'une des cloisons (6"') du boîtier d'appareil encastrable (1) et sont respectivement en prise, par l'intermédiaire d'éléments d'encliquetage (19', 19"'), avec un élément de maintien (12") qui est disposé dans la partie de fond (5) du boîtier (4).

2. Boîtier d'appareil encastrable (1) pour canaux d'intégration d'appareils (11) selon la revendication 1, **caractérisé en ce que** la partie de fond (5) du boîtier (4) présente dans sa région de bord au moins partiellement une épaisseur réduite qui, à l'état assemblé du boîtier d'appareil encastrable (1), est au moins partiellement reçue dans des éléments de serrage (23, 23') coopérant avec celle-ci des pièces d'angle (2, 2').

3. Boîtier d'appareil encastrable (1) pour canaux d'intégration d'appareils (11) selon la revendication 1 ou la revendication 2, **caractérisé en ce que** la partie de fond (5) du boîtier (4) présente dans sa région de bord au moins un réceptacle de guidage (15, 15') dans lequel est reçu, à l'état assemblé du boîtier d'appareil encastrable (1), un élément de guidage (20, 20') disposé sur les parties amovibles des cloisons (6, 6', 6", 6"').

4. Canal d'intégration d'appareil (11) comprenant au moins un boîtier d'appareil encastrable (1) pour canaux d'intégration d'appareils (11) selon l'une quelconque des revendications 1 à 3.
